# DEMANDE DE BREVET EUROPEEN

(11) **EP 4 717 587 A1**
(43) Date de publication de la demande: **01.04.2026**
(21) Numéro de dépôt: 25204829.3
(22) Date de dépôt: 26.09.2025
(51) Int. Cl.: B64C 1/40, B64C 7/00, B64D 27/40, B64D 33/08

(54) **DISPOSITIF DE PROTECTION THERMIQUE D'UN LONGERON INFÉRIEUR D'UN CAISSON D'AÉRONEF**

(30) Priorité: 30.09.2024 FR 2410439
(71) Demandeur: AIRBUS OPERATIONS (S.A.S.), 31060 Toulouse (FR)
(72) Inventeur: BLANC, Jonathan, 31060 TOULOUSE (FR); PUECH, Jacky, 31060 TOULOUSE (FR); CRUAUD-PRIEUR, Solène, 31060 TOULOUSE (FR); POUSSOU, Fabien, 31060 TOULOUSE (FR); NENY, Jérôme, 31060 TOULOUSE (FR)
(74) Mandataire: Cabinet Le Guen Maillet

(57) **Abrégé**

L'invention concerne un dispositif de protection thermique d'un longeron inférieur (106a) d'un caisson (106) d'aéronef (50). Ledit dispositif comportant un bouclier (20) qui comporte :
- un premier panneau (21) s'étendant parallèlement et à une première distance du longeron inférieur ;
- un deuxième panneau (22) disposé entre ledit premier panneau et le longeron inférieur et qui s'étend parallèlement et à une deuxième distance du longeron inférieur.

Lesdits panneaux délimitent entre eux un canal qui s'étend parallèlement et à distance du longeron inférieur. Une extrémité avant (231) dudit canal forme un orifice d'entrée d'un flux d'air provenant de la soufflante de l'aéronef et s'écoulant de l'avant vers l'arrière de l'aéronef à travers ledit canal (23).

L'invention propose ainsi une protection thermique rigide du longeron inférieur en faisant s'écouler, au sein du bouclier, un flux d'air provenant de la soufflante. Un tel bouclier permet en outre de fournir une protection robuste dont l'épaisseur, et donc l'encombrement, est optimisée.

## Description

### DOMAINE TECHNIQUE

La présente invention concerne un dispositif de protection thermique d'un longeron inférieur d'un caisson d'aéronef, ainsi qu'un système de propulsion et un aéronef comportant un tel dispositif de protection.

### ÉTAT DE LA TECHNIQUE ANTÉRIEURE

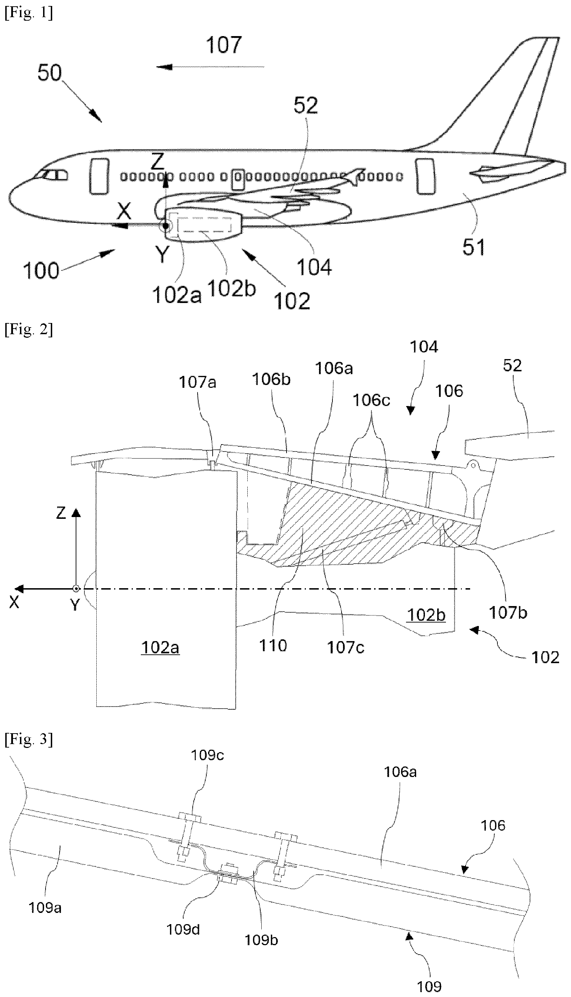

Classiquement, et comme illustré sur les Figs. 1 et 2, un aéronef 50 comporte un fuselage 51 et une aile 52 de chaque côté du fuselage 51. Au moins un système de propulsion 100 est fixé sous chaque aile 52 et comporte un turboréacteur 102 et un mât réacteur 104.

Par convention, X désigne l'axe longitudinal du système de propulsion 100 correspondant à un axe longitudinal X du turboréacteur 102. Par ailleurs, Y désigne l'axe transversal du système 100 correspondant à un axe transversal du turboréacteur 102, cet axe étant horizontal lorsque l'aéronef est au sol, et Z désigne l'axe vertical ou la hauteur verticale du système de propulsion 100 correspondant à un axe vertical du turboréacteur 102, cet axe étant vertical lorsque l'aéronef est au sol, ces trois axes X, Y et Z étant mutuellement orthogonaux.

Par ailleurs, les termes « avant » et « arrière » sont à considérer par rapport à une direction de déplacement vers l'avant de l'aéronef lorsque le turboréacteur 102 est en fonctionnement, cette direction étant schématisée par la flèche 107. Le turboréacteur 102 possède également un plan médian vertical P XZ passant par l'axe longitudinal X et l'axe vertical Z.

Le turboréacteur 102 comporte, à l'avant, un carter de soufflante 102a entourant un conduit de soufflante tubulaire dans lequel tourne une soufflante et, à l'arrière du carter de soufflante 102a, un carter central 102b de plus petite taille, renfermant le cœur du turboréacteur 102. Le carter de soufflante 102a et le carter central 102b s'étendent globalement coaxialement autour de l'axe longitudinal X.

La Fig. 2 montre le système de propulsion 100 avec le turboréacteur 102 et le mât réacteur 104 par lequel le turboréacteur 102 est fixé à l'aile 52. Le mât réacteur 104 est représenté ici par sa structure primaire 106 qui est fixée sous l'aile 52.

La structure primaire 106 s'étend le long de l'axe longitudinal X entre une extrémité avant et une extrémité arrière et prend la forme d'un caisson qui comporte un longeron inférieur 106a, un longeron supérieur 106b, deux panneaux latéraux (non illustrés) reliant les deux longerons et des nervures 106c internes réparties le long du caisson 106.

Le turboréacteur 102 est fixé sous le mât réacteur 104 au moyen d'attaches moteur qui comprennent classiquement, à l'avant, une attache moteur avant 107a, à l'arrière, une attache moteur arrière 107b, et entre les attaches moteur avant et arrière, un assemblage de reprise d'effort de poussée comprenant des bielles de reprise 107c fixées entre le turboréacteur 102 et le caisson 106, pour absorber les forces de poussée générées par le turboréacteur 102.

Le mât réacteur comporte également une structure secondaire 108 qui est disposée au niveau de l'extrémité avant du caisson 106 et en-dessous du longeron inférieur 106a. Cette structure secondaire se situe directement face au carter de soufflante 102a et reçoit donc de l'air extérieur issu de la soufflante 102. La structure secondaire 108 n'est donc pas exposée à des niveaux de températures très élevés puisque l'air extérieur est généralement froid et refroidit dans la structure secondaire 108.

Ceci n'est pas le cas du longeron inférieur 106a du caisson 106. En effet, et comme illustré en hachure sur la Fig. 2, la zone 110 située entre le longeron inférieur 106a, la structure secondaire 108 et le carter central 102b du turboréacteur est exposée à des températures très élevées et cette zone constitue donc une zone de risques d'incendie importants.

Afin de protéger thermiquement le caisson 106 du mât réacteur 104, il est connu de mettre en œuvre une couverture thermique sous le longeron inférieur 106a. Une telle couverture thermique est généralement souple et est apposée contre le longeron inférieur 106a en s'étendant de la structure secondaire 108 jusqu'à l'extrémité arrière du longeron inférieur 106a.

La Fig. 3 illustre un exemple d'un point de fixation d'une couverture thermique 109 sur le longeron inférieur 106a selon l'art antérieur. Généralement, la couverture thermique 109 comporte une plaque 109a isolante comportant un corps, par exemple fabriqué à partir de poudre de silice minérale, enserré entre deux tôles fines, par exemple de 0.2 mm d'épaisseur fabriquées en inconel (marque déposée). La plaque 109a est fixée à la face inférieure du longeron inférieur 106a via une entretoise 109b qui est fixée d'une part au longeron inférieur 106a par deux boulons 109c et d'autre part à la plaque 109a isolante par un boulon 109d.

Un inconvénient de cette solution réside dans le fait que chaque point de fixation de la couverture thermique 109 constitue un pont thermique important. En effet, à chaque point de fixation, la couverture 109 est inexistante (ou quasi inexistante), ce qui peut engendrer une forte augmentation localisée de la température du longeron inférieur 106a. De plus, la couverture 109 présente généralement une épaisseur supérieure à 20 mm, ce qui représente un encombrement relativement élevé limitant les possibilités d'installation d'autres équipements dans cette zone 110. En outre, les matériaux utilisés pour la fabrication d'une telle couverture thermique sont relativement coûteux. Enfin, une telle couverture thermique étant relativement fragile, la couverture thermique peut aisément être détériorée lors de sa manipulation, son installation ou l'installation d'équipements voisins.

Ainsi, il existe donc un besoin de fournir une protection thermique optimale du longeron inférieur d'un caisson de mât réacteur pour aéronef qui réponde au moins à certains de ces inconvénients.

### EXPOSÉ DE L'INVENTION

Un objet de la présente invention est de proposer un dispositif destiné à la protection thermique d'un longeron inférieur d'un caisson d'aéronef qui assure une protection thermique optimale en limitant les ponts thermiques, qui soit simple à mettre en œuvre et qui soit robuste, notamment.

À cet effet, est proposé un dispositif destiné à la protection thermique d'un longeron inférieur d'un caisson d'aéronef, ledit aéronef comportant un turboréacteur destiné à être fixé en dessous dudit longeron inférieur et comportant une soufflante destinée à souffler un flux d'air de l'avant vers l'arrière dudit aéronef. Ledit dispositif comportant un bouclier de protection thermique, destiné à être disposé entre ledit longeron inférieur et ledit turboréacteur comporte
- un premier panneau destiné à s'étendre globalement parallèlement à une face inférieure dudit longeron inférieur et à une première distance de ladite face inférieure dudit longeron inférieur ;
- un deuxième panneau destiné à être disposé entre ledit premier panneau et ladite face inférieure dudit longeron inférieur, ledit deuxième panneau étant destiné à s'étendre globalement parallèlement à ladite face inférieure dudit longeron inférieur et à une deuxième distance de ladite face inférieure dudit longeron inférieur.

Lesdits premier et deuxième panneaux délimitent entre eux un canal s'étendant globalement parallèlement et à distance de ladite face inférieure, ledit canal comportant une extrémité avant destinée à être située à l'arrière et en vis-à-vis de ladite soufflante dudit turboréacteur, ladite extrémité avant formant un orifice d'entrée d'une partie primaire dudit flux d'air, ladite partie primaire dudit flux d'air s'écoulant de l'avant vers l'arrière dudit aéronef à travers ledit canal. Ledit dispositif comporte en outre des moyens de fixation destinés à fixer ledit bouclier de protection thermique à ladite face inférieure dudit longeron inférieur.

En particulier, ledit premier panneau est plein et ledit deuxième panneau est au moins partiellement perforé de sorte que ledit ladite partie primaire dudit flux d'air s'écoule à l'intérieur dudit canal et qu'au moins une partie secondaire de ladite partie primaire dudit flux d'air s'écoule à travers ledit deuxième panneau en direction dudit longeron inférieur.

De cette manière, l'invention propose une protection thermique rigide du longeron inférieur qui permet de garantir que la température du bouclier soit toujours optimale en faisant s'écouler un flux d'air provenant de la soufflante au sein du bouclier. Ainsi, la température du longeron inférieur est abaissée efficacement de sorte à ce qu'elle soit maintenue à une température optimale sensiblement inférieure à la température de la zone centrale du turboréacteur qui est très chaude. Un tel bouclier permet en outre de fournir une protection robuste dont l'épaisseur, et donc l'encombrement, est optimisée.

Selon un exemple de réalisation n'appartenant pas à l'invention, lesdits premier et deuxième panneaux sont pleins de sorte que ladite partie primaire dudit flux d'air s'écoule uniquement à l'intérieur dudit canal.

Selon un aspect particulier de l'invention, ledit premier panneau comporte une pluralité de premiers perçages et ledit deuxième panneau comporte, pour chaque premier perçage, un deuxième perçage coaxial audit premier perçage. De plus, le bouclier de protection thermique comporte, pour chaque paire d'un premier perçage et d'un deuxième perçage associés, un insert disposé entre lesdits premier et deuxième panneaux, où l'insert comporte un premier perçage central coaxial avec lesdits premier perçage et deuxième perçage. Lesdits premier perçage central, premier perçage et deuxième perçage permettent le passage d'un élément desdits moyens de fixation.

Selon un autre aspect particulier de l'invention, chaque insert comporte une première surface d'appui à laquelle est fixé le premier panneau et une deuxième surface d'appui à laquelle est fixé le deuxième panneau.

Selon encore un autre aspect particulier de l'invention, ladite deuxième distance est supérieure à 2mm, et de préférence comprise entre 5 et 45 mm.

Selon un aspect particulier de l'invention, le dispositif comporte, pour chaque insert, une entretoise fabriquée dans un matériau thermiquement résistant, ladite entretoise étant destinée à être disposée entre ledit deuxième panneau et ladite face inférieure dudit longeron inférieur, où ladite entretoise présente une épaisseur globalement égale à ladite deuxième distance, et où ladite entretoise comporte un deuxième perçage central s'étendant coaxialement audit premier perçage de l'insert associé et permettant le passage dudit un élément desdits moyens de fixation.

Selon un autre aspect particulier de l'invention, le dispositif comporte des moyens de fixation dudit bouclier thermique audit longeron inférieur, lesdits moyens de fixation comportant :
- un support d'écrou destiné à être disposé contre une face supérieure dudit longeron inférieur, ledit support d'écrou comportant, pour chaque insert, un perçage coaxial avec ledit premier perçage central dudit insert ;
- pour chaque perçage, un écrou de fixation disposé contre ledit support d'écrou ;
- pour chaque écrou de fixation, une vis de fixation comportant une tige filetée destinée à être enfilée successivement dans ledit premier perçage central de l'insert associé, dans ledit deuxième perçage central de l'entretoise associée, dans un perçage dudit longeron inférieur, dans ledit perçage associé dudit support d'écrou et dans ledit écrou de fixation associé pour être vissé dans ce dernier, et une tête de vis destinée à venir en contact avec ledit premier panneau.

L'invention propose également un système de propulsion comportant un turboréacteur destiné à être fixé à un longeron inférieur d'un caisson d'aéronef, ledit système comportant un dispositif tel que décrit précédemment.

L'invention propose en outre un aéronef comportant un système de propulsion tel que décrit précédemment.

### BRÈVE DESCRIPTION DES DESSINS

Les caractéristiques de l'invention mentionnées ci-dessus, ainsi que d'autres, apparaîtront plus clairement à la lecture de la description suivante de deux exemples de réalisation, ladite description étant faite en relation avec les dessins joints, parmi lesquels :
[Fig. 1] est une vue de côté d'un aéronef selon l'invention ;
[Fig. 2] est une vue de côté et en coupe d'un système de propulsion selon l'art antérieur ;
[Fig. 3] est une vue de côté et en coupe d'une couverture thermique pour un système de propulsion selon l'art antérieur ;
[Fig. 4] est une vue de côté et en coupe d'un système de propulsion selon l'invention ;
[Fig. 5] est une vue en perspective et en coupe d'un dispositif de protection thermique pour un système de propulsion selon l'invention ;
[Fig. 6a] est une vue de côté et en coupe d'un dispositif de protection thermique selon un premier exemple de réalisation de l'invention ;
[Fig. 6b] est une vue de détail du dispositif de protection thermique de la Fig. 6a ;
[Fig. 7a] est une vue de côté et en coupe d'un dispositif de protection thermique selon un deuxième exemple de réalisation de l'invention ;
[Fig. 7b] est une vue de détail du dispositif de protection thermique de la Fig. 7a ; et
[Fig. 8] est une vue éclatée d'un dispositif de protection thermique selon l'invention.

### EXPOSÉ DÉTAILLÉ DE DEUX EXEMPLES DE RÉALISATION

La Fig. 1 illustre un aéronef 50 selon l'invention qui comporte un fuselage 51 et une aile 52 de chaque côté du fuselage 51. Au moins un système de propulsion 100 est fixé sous chaque aile 52 et comporte un turboréacteur 102 et un mât réacteur 104.

Le turboréacteur 102 comporte, à l'avant, un carter de soufflante 102a entourant un conduit de soufflante tubulaire dans lequel tourne une soufflante destinée à souffler un flux d'air F (provenant de l'extérieur de l'aéronef 50) de l'avant vers l'arrière de l'aéronef 50 et, à l'arrière du carter de soufflante 102a, un carter central 102b de plus petite taille, renfermant le cœur du turboréacteur 102. Le carter de soufflante 102a et le carter central 102b s'étendent globalement coaxialement autour de l'axe longitudinal X.

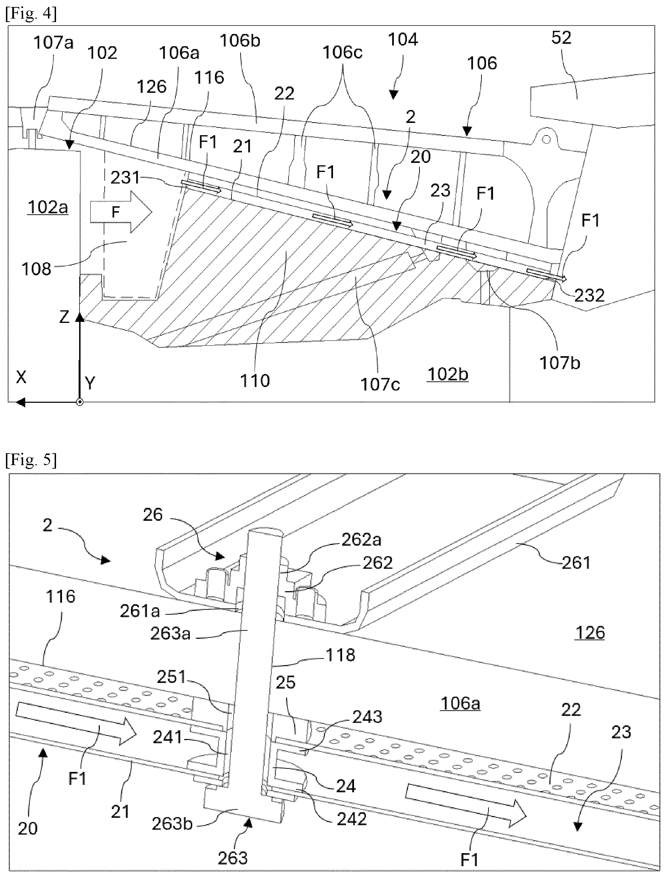

La Fig.4 montre le système de propulsion 100 avec le turboréacteur 102 et le mât réacteur 104 par lequel le turboréacteur 102 est fixé à l'aile 52. Le mât réacteur 104 est représenté ici par sa structure primaire 106 qui est fixée sous l'aile 52.

La structure primaire 106 s'étend le long de l'axe longitudinal X entre une extrémité avant et une extrémité arrière et prend la forme d'un caisson qui comporte un longeron inférieur 106a, un longeron supérieur 106b, deux panneaux latéraux (non illustrés) reliant les deux longerons et des nervures 106c internes réparties le long du caisson 106.

Le mât réacteur comporte également une structure secondaire 108 qui est disposée au niveau de l'extrémité avant du caisson 106 et en-dessous du longeron inférieur 106a. Cette structure secondaire se situe directement face au carter de soufflante 102a et reçoit donc le flux d'air F issu de la soufflante 102.

Les Figs. 4, 5, 6a et 7a illustrent des exemples de dispositifs 2 destinés à la protection thermique du longeron inférieur 106a du caisson 106 de l'aéronef 50.

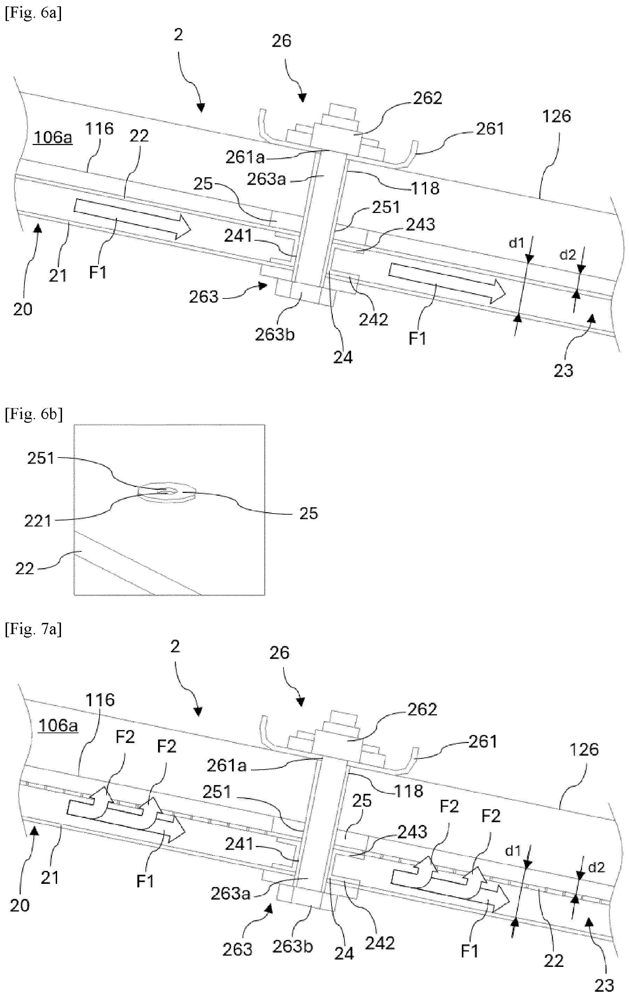

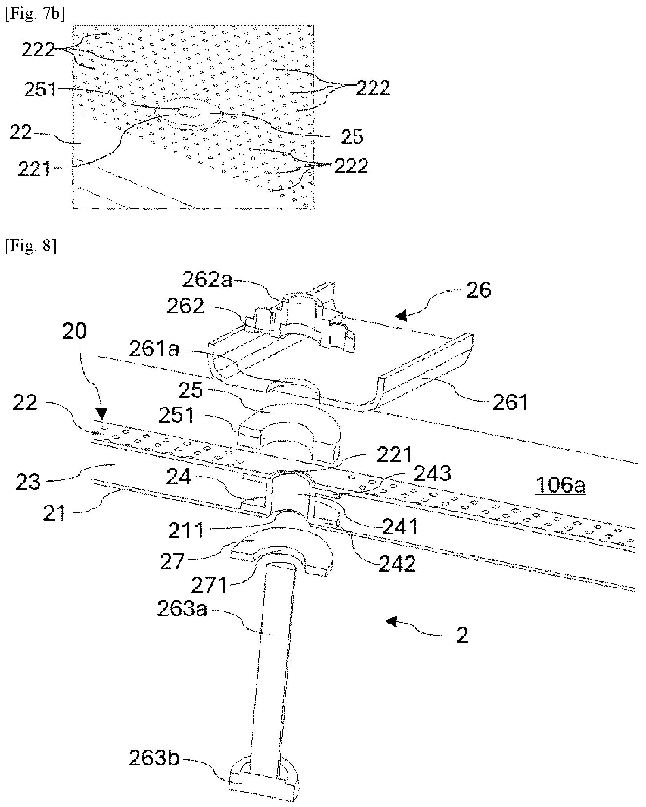

Plus particulièrement, le dispositif 2 comporte un bouclier 20 de protection thermique destiné à être disposé entre le longeron inférieur 106a et le turboréacteur 102. Le bouclier 20 comporte un premier panneau 21 destiné à s'étendre globalement parallèlement à une face inférieure 116 du longeron inférieur 106a et à une première distance d1 de la face inférieure 116 du longeron inférieur 106a. Par exemple, la première distance d1 (visible sur les Figs. 6a et 7a) séparant le premier panneau 21 de la face inférieure 116 du longeron inférieur 106a est comprise entre 10 et 70 mm.

Le bouclier 20 de protection thermique comporte en outre un deuxième panneau 22 destiné à être disposé entre le premier panneau 21 et la face inférieure 116 du longeron inférieur 106a. Le deuxième panneau 22 est destiné à s'étendre globalement parallèlement à la face inférieure 116 du longeron inférieur 106a, c'est-à-dire globalement parallèlement au premier panneau 21, et à une deuxième distance d2 de la face inférieure 116 du longeron inférieur 106a. Par exemple, la deuxième distance d2 (visible sur les Figs. 6a et 7a) séparant le deuxième panneau 22 de la face inférieure 116 du longeron inférieur 106a est de préférence comprise entre 5 et 45 mm.

On comprend donc que la deuxième distance d2 est inférieure à la première distance d1. De cette manière, les premier 21 et deuxième 22 panneaux sont séparés l'un de l'autre et délimitent entre eux un canal 23 qui s'étend globalement parallèlement et à distance de la face inférieure 116 du longeron inférieur 106a. L'épaisseur du canal 23, qui est obtenue en soustrayant la deuxième distance d2 à la première distance d1, est comprise entre environ 5 et 20 mm. L'épaisseur du canal 23 est sélectionnée en fonction du volume d'air nécessaire pour ventiler le bouclier thermique 20 (cela dépend donc aussi des dimensions de la face inférieure 116 du longeron inférieur 106a notamment).

Plus particulièrement, une extrémité avant 231 du canal 23 est destinée à être située à l'arrière et en vis-à-vis de la soufflante du turboréacteur 102 et à former un orifice d'entrée d'une partie primaire F1 du flux d'air F. Le canal 23 comporte une deuxième extrémité 232 située à l'arrière du système de propulsion 100 qui permet d'évacuer la partie primaire F1 du flux d'air F. La partie primaire F1 du flux d'air F s'écoule donc de l'avant vers l'arrière de l'aéronef 50 à travers le canal 23. Le bouclier 20 est ainsi ventilé de sorte à abaisser sa température et protéger le longeron inférieur 106a de la chaleur provenant de la zone centrale 110 très chaude du système de propulsion 100.

Le dispositif 2 comporte en outre des moyens de fixation 26 (décrits plus en détails dans la suite de cette description) destinés à fixer le bouclier de protection thermique 20 à la face inférieure 116 du longeron inférieur 106a.

Un tel bouclier 20, disposé à distance de la face inférieure 116 du longeron inférieur 106a, permet d'une part de fournir une protection thermique rigide du longeron inférieur 106a et d'autre part d'assurer que la température du bouclier 20 soit toujours optimale en faisant s'écouler un flux d'air provenant de la soufflante au sein du bouclier 20. De cette manière, la température du longeron inférieur 106b est abaissée efficacement de sorte qu'elle soit maintenue à une température optimale sensiblement inférieure à la température de la zone centrale 110 très chaude.

Un tel bouclier 20 permet en outre de s'abstenir de l'utilisation d'une couverture thermique souple présentant une épaisseur importante. Ainsi, l'épaisseur, et donc l'encombrement, du bouclier 20 est optimisée. L'utilisation du bouclier 20 selon l'invention permet, par rapport aux solutions de l'art antérieur, de libérer un espace d'au moins 10 mm, par exemple, sur toute la longueur du longeron inférieur 106a. De plus, les matériaux utilisés pour fabriquer le bouclier présentent un coût sensiblement inférieur par rapport aux matériaux utilisés pour la couverture thermique de l'art antérieur (et notamment à celui du corps de la couverture).

Un bouclier 20 de protection thermique fabriqué en acier inoxydable en titane (par exemple en titane TA6V) assure une robustesse élevée de sorte à limiter les risques d'endommagement lors de la manipulation et de la mise en place du bouclier 20. De plus, cela permet également de limiter les risques d'endommagement dus, par exemple, à l'installation d'autres équipements à proximité du bouclier 20. De même, les panneaux 21 et 22 présentent une épaisseur comprise entre 0,2mm et 1mm de sorte à encore améliorer la robustesse du bouclier 20.

Les Figs. 6a et 6b illustrent un premier exemple de réalisation, n'appartenant pas à l'invention, dans lequel les premier 21 et deuxième 22 panneaux sont pleins (c'est-à-dire qu'ils ne présentent pas de perforation). En d'autres termes, la mise en œuvre de panneaux 21 et 22 pleins permet à la partie primaire F1 du flux d'air F de ne s'écouler qu'à l'intérieur du canal 23. En effet, la partie primaire F1 du flux d'air F entrant dans le canal par la première extrémité 231 ne peut s'échapper du canal 23 que par la deuxième extrémité 232 du canal 23 situé à l'arrière du système de propulsion 100. De cette manière, le bouclier 20 agit telle une barrière froide entre la zone centrale 110 très chaude du système de propulsion 100 et le longeron inférieur 106a du mât réacteur 104. Le longeron inférieur 106a est donc protégé de la chaleur émise par le système de propulsion 100.

En particulier, le flux d'air F alimente le canal 23 dès que la soufflante du turboréacteur 102 fonctionne. De l'air alimente donc en continu le canal 23 lorsque le turboréacteur 102 fonctionne de sorte que le longeron inférieur 106a soit protégé lorsque la zone centrale 110 est chaude (c'est-à-dire lorsque le turboréacteur 102 est en fonctionnement).

Les Figs. 5, 7a, 7b et 8 illustrent un deuxième exemple de réalisation de l'invention dans lequel le premier panneau 21 est plein et le deuxième panneau 22 est au moins partiellement perforé. En d'autres termes, la partie primaire F1 du flux d'air F peut circuler dans le canal 23 de la première extrémité 231 vers jusqu'à la deuxième extrémité 232 mais, au moins une partie secondaire F2 de la partie primaire F1du flux d'air F peut s'écouler à travers le deuxième panneau 22 qui est au moins partiellement perforé de sorte que cette partie secondaire F2 puisse s'écouler en direction du longeron inférieur 106a et refroidir directement ce dernier.

De cette manière, le bouclier 20 agit telle une barrière froide entre la zone centrale 110 très chaude du système de propulsion 100 et le longeron inférieur 106a du mât réacteur 104 tout en permettant une ventilation continue et directe de la face inférieure 116 du longeron inférieur 106a de sorte à protéger de manière optimale le longeron inférieur 106a de la chaleur de la zone centrale 110.

En particulier, le flux d'air F alimente le canal 23 dès que la soufflante du turboréacteur 102 fonctionne. De l'air alimente donc en continu le canal 23 lorsque le turboréacteur 102 fonctionne de sorte que le longeron inférieur 106a soit protégé de la chaleur et ventilé par de l'air lorsque la zone centrale 110 est chaude (c'est-à-dire lorsque le turboréacteur 100 est en fonctionnement).

Le deuxième panneau 22 présente des perforations qui sont, de préférence, distribuées de manière globalement homogène. En fonction des besoins de ventilation du bouclier 20, les perforations peuvent présenter un diamètre d'environ 1 mm et être espacées de 3,5 mm ou bien un diamètre de 2,5 mm et être espacées de 6 mm, par exemple. De cette manière, la partie secondaire F2 représente un flux optimal pour assurer une protection et une ventilation optimale du longeron inférieur 106a.

Conformément aux deux exemples de réalisation précédemment décrits, et comme illustré sur les Figs. 5 à 8, les premier 21 et deuxième 22 panneaux comportent respectivement une pluralité de premiers 211 et de deuxièmes 221 perçages qui s'étendent globalement coaxialement entre eux. Autrement dit, le premier panneau 21 comporte une pluralité de premiers perçages 211 et le deuxième panneau 22 comporte, pour chaque premier perçage 211, un deuxième perçage 221 coaxial au premier perçage 211. De plus, le bouclier de protection thermique 20 comporte, pour chaque paire d'un premier perçage 211 et d'un deuxième perçage 221 associés, un insert 24 qui est disposé entre les premier 21 et deuxième 22 panneaux. Plus particulièrement, chaque insert 24 comporte un premier perçage central 241 qui s'étend coaxialement à un premier perçage 211 du premier panneau 21 et à un deuxième perçage 221 du deuxième panneau 22 associés. Les premier perçage central 241, premier perçage 211 et deuxième perçage 221 permettent le passage d'un élément des moyens de fixation 26 (décrits ci-après).

En particulier, chaque insert 24 comporte une première surface d'appui 242, de forme sensiblement circulaire dans cet exemple, à laquelle est fixé le premier panneau 21 et une deuxième surface d'appui 243, de forme également sensiblement circulaire dans cet exemple, à laquelle est fixé le deuxième panneau 22. Les première 242 et deuxième 243 surfaces d'appui s'étendent globalement parallèlement et sont situées en vis-à-vis l'une de l'autre. Les première 242 et deuxième 243 surfaces d'appui s'étendent globalement au niveau des extrémités du perçage central 241.

Comme illustré sur les Figs. 5 à 8, les panneaux 21 et 22 sont fixés sur les faces extérieures des surfaces d'appui 242 et 243. En d'autres termes, les inserts 24 sont englobés/enserrés entre les panneaux 21 et 22.

Il est possible de sélectionner l'épaisseur de l'insert 24 (c'est-à-dire la distance séparant les première 242 et deuxième 243 surfaces d'appui) en fonction de l'épaisseur du canal 23 souhaitée pour protéger thermiquement le longeron inférieur 106a de manière optimale. De préférence, l'épaisseur de l'insert 24 est comprise environ entre 5 et 20 mm.

Par exemple, les panneaux 21 et 22 sont soudés, ou brasés, aux inserts 24. Toutefois, d'autres techniques de fixation peuvent être envisagées sans s'écarter du principe de l'invention.

Ces inserts permettent de renforcer/rigidifier le bouclier 20 et, comme détaillé dans la suite de cette description, de fixer le bouclier 20 au longeron inférieur 106a.

On comprend donc aisément qu'il est envisageable de mettre en œuvre autant d'inserts 24 que nécessaire pour assurer d'une part, une fixation optimale du bouclier 20 au longeron inférieur 106a et d'autre part, une bonne tenue structurelle du bouclier 20.

En outre, des inserts 24 peuvent être mis en œuvre uniquement pour renforcer la structure du bouclier 20. Dans ce cas, ces inserts 24 de renfort ne coopèrent pas avec des moyens de fixation 26 (décrits ci-après).

De préférence, la deuxième distance d2 séparant le deuxième panneau 22 de la face inférieure 116 du longeron inférieur 106a est comprise environ entre 5 et 45 mm.

Conformément aux deux exemples de réalisation précédemment décrits, et comme illustré, le dispositif 2 comporte, pour chaque insert 24, une entretoise 25 fabriquée dans un matériau thermiquement résistant (c'est-à-dire un matériau capable de résister à l'environnement spécifique de l'invention dans lequel les températures peuvent atteindre les 500 °C par exemple). De préférence, l'entretoise 25 est fabriquée en matériau céramique. En effet, un tel matériau présente une conductivité de 0,01 J/s/cm2 (°C/cm), ce qui lui permet dans certains cas de supporter des températures pouvant aller jusqu'à 1260 °C, par exemple. L'entretoise 25 est destinée à être disposée entre le deuxième panneau 22 et la face inférieure 116 du longeron inférieur 106a. L'entretoise 25 présente une épaisseur globalement égale à la deuxième distance d2 et permet de garantir une isolation thermique et un espacement constant entre la face inférieure 116 du longeron inférieur 106a et le bouclier 20. L'entretoise 25 permet en outre d'optimiser le rôle de barrière thermique joué par le bouclier 20.

Comme précédemment, l'entretoise 25 comporte un deuxième perçage central 251 s'étendant coaxialement au premier perçage 241 de l'insert 24 associé et permettant le passage de l'élément des moyens de fixation 26 du bouclier de protection thermique 20 au longeron inférieur 106a (comme détaillé dans la suite de cette description). L'entretoise 25 présente ainsi une épaisseur (globalement égale à la deuxième distance d2) qui est sélectionnée pour éviter tout risque d'écrasement du bouclier 20 lors du serrage des moyens de fixation 26. L'épaisseur de l'entretoise 25 peut donc varier en fonction des montages.

De plus, l'entretoise 25 permet de limiter les ponts thermiques entre le bouclier 20 et la face inférieure 116 du longeron inférieur 106a. Elle permet également de fournir un jeu de montage entre le bouclier 20 et le longeron inférieur 106a, afin de prendre en compte les fixations d'éclissage du mât réacteur 104 (c'est-à-dire les fixations entre les longerons et les panneaux latéraux et/ou les nervures, notamment).

Comme discuté précédemment, le dispositif 2 comporte des moyens de fixation 26 du bouclier thermique 20 au longeron inférieur 106a. Ces moyens de fixation 26 comportent un support d'écrou 261 destiné à être disposé contre une face supérieure 126 (c'est-à-dire la face opposée à la face inférieure 116) du longeron inférieur 106a. Le support d'écrou 261 comporte, pour chaque insert 24, un perçage 261a qui s'étend coaxialement avec le premier perçage central 241 de l'insert 24 correspondant (et donc également coaxialement aux perçages 211 et 221 associés des premier et deuxième panneaux 21 et 22).

Les moyens de fixation 26 comportent, pour chaque perçage 261a, un écrou de fixation 262 disposé contre le support d'écrou 261 sur la face du support d'écrou 261 opposé au longeron inférieur 106a. L'écrou de fixation 262 comporte un perçage taraudé 262a qui s'étend coaxialement au premier perçage central 241 de l'insert 24 associé (et donc également coaxialement aux perçages 211 et 221 associés des premier et deuxième panneaux 21 et 22 et au perçage 261a associé du support d'écrou 261).

Les moyens de fixation 26 comportent également, pour chaque écrou de fixation 262, une vis de fixation 263 qui comporte une tige filetée 263a destinée à être enfilée successivement dans le premier perçage central 241 de l'insert 24 associé, dans le deuxième perçage central 251 de l'entretoise 25 associée, dans un perçage 118 du longeron inférieur 106a, dans le perçage 261a associé du support d'écrou 261 et dans le perçage taraudé 262a de l'écrou de fixation 262 associé pour être vissé dans ce dernier. La vis de fixation 263 comporte aussi une tête de vis 263b destinée à venir en contact avec le premier panneau 21 de sorte que la tête de vis 263b et l'écrou de fixation 262 enserrent le bouclier 20 et le longeron inférieur 106a.

De tels moyens de fixation permettent d'assurer un assemblage fiable du bouclier 20 au longeron inférieur 106a. De plus, la façon dont le bouclier 20 est fixé au longeron inférieur 106a permet de limiter, voire supprimer, les ponts thermiques au niveau des différents points de fixation du bouclier 20 au longeron inférieur 106a.

En outre, de tels moyens de fixation 26 sont simples et peu coûteux à mettre en œuvre.

De préférence, les moyens de fixation 26 comportent en outre une rondelle 27 comportant un troisième perçage central 271. La rondelle 27 est disposée entre la tête de vis 263b et le premier panneau 21 et la tige filetée 263a est destinée à être enfilée dans le troisième perçage central 271.

## Revendications

1. Dispositif (2) destiné à la protection thermique d'un longeron inférieur (106a) d'un caisson (106) d'aéronef (50), ledit aéronef (50) comportant un turboréacteur (102) destiné à être fixé en-dessous dudit longeron inférieur (106a) et comportant une soufflante destinée à souffler un flux d'air (F) de l'avant vers l'arrière dudit aéronef (50), ledit dispositif (2) comportant un bouclier de protection thermique (20), destiné à être disposé entre ledit longeron inférieur (106a) et ledit turboréacteur (102), qui comporte :
- un premier panneau (21) destiné à s'étendre globalement parallèlement à une face inférieure (116) dudit longeron inférieur (106a) et à une première distance (d1) de ladite face inférieure (116) dudit longeron inférieur (106a) ;
- un deuxième panneau (22) destiné à être disposé entre ledit premier panneau (21) et ladite face inférieure (116) dudit longeron inférieur (106a), ledit deuxième panneau (22) étant destiné à s'étendre globalement parallèlement à ladite face inférieure (116) dudit longeron inférieur (106a) et à une deuxième distance (d2) de ladite face inférieure (116) dudit longeron inférieur (106a) ;
où lesdits premier (21) et deuxième (22) panneaux délimitent entre eux un canal (23) comportant une extrémité avant (231) destinée à être située à l'arrière et en vis-à-vis de ladite soufflante dudit turboréacteur (102), ladite extrémité avant (231) formant un orifice d'entrée d'une partie primaire (F1) dudit flux d'air (F), ladite partie primaire (F1) dudit flux d'air (F) s'écoulant de l'avant vers l'arrière dudit aéronef (50) à travers ledit canal (23) ; et
ledit dispositif (2) comportant en outre des moyens de fixation (26) destinés à fixer ledit bouclier de protection thermique (20) à ladite face inférieure (116) dudit longeron inférieur (106a)
ledit dispositif (2) étant **caractérisé en ce que** ledit premier panneau (21) est plein et ledit deuxième panneau (22) est au moins partiellement perforé de sorte que ladite partie primaire (F1) dudit flux d'air (F) s'écoule à l'intérieur dudit canal (23) et qu'au moins une partie du secondaire (F2) de ladite partie primaire (F1) dudit flux d'air (F) s'écoule à travers ledit deuxième panneau (22) en direction dudit longeron inférieur (106a).

2. Dispositif (2) selon la revendication 1, **caractérisé en ce que** ledit premier panneau (21) comporte une pluralité de premiers perçages (211), **en ce que** ledit deuxième panneau (22) comporte pour chaque premier perçage (211), un deuxième perçage (221) coaxial audit premier perçage (211), et **en ce que** ledit bouclier de protection thermique (20) comporte pour chaque paire d'un premier perçage (211) et d'un deuxième perçage (221) associés, un insert (24) disposé entre lesdits premier (21) et deuxième (22) panneaux, où l'insert (24) comporte un premier perçage central (241) coaxial avec lesdits premier perçage (211) et deuxième perçage (221), où lesdits premier perçage central (241), premier perçage (211) et deuxième perçage (221) permettent le passage d'un élément desdits moyens de fixation (26).

3. Dispositif (2) selon la revendication 2, **caractérisé en ce que** chaque insert (24) comporte une première surface d'appui (242) à laquelle est fixé le premier panneau (21) et une deuxième surface d'appui (243) à laquelle est fixé le deuxième panneau (22).

4. Dispositif (2) selon l'une quelconque des revendications 1 à 3, **caractérisé en ce que** ladite deuxième distance (d2) est comprise entre 5 et 45 mm.

5. Dispositif (2) selon l'une quelconque des revendications 2 à 4, **caractérisé en ce qu'**il comporte, pour chaque insert (24), une entretoise (25) destinée à être disposée entre ledit deuxième panneau (22) et ladite face inférieure (116) dudit longeron inférieur (106a), où ladite entretoise (25) présente une épaisseur globalement égale à ladite deuxième distance (d2), et où ladite entretoise (25) comporte un deuxième perçage central (251) s'étendant coaxialement audit premier perçage (241) de l'insert (24) associé et permettant le passage dudit un élément desdits moyens de fixation (26).

6. Dispositif (2) selon la revendication 5, **caractérisé en ce que** lesdits moyens de fixation (26) comportent :
- un support d'écrou (261) destiné à être disposé contre une face supérieure (126) dudit longeron inférieur (106a), ledit support d'écrou (261) comportant, pour chaque insert (24), un perçage (261a) coaxial avec ledit premier perçage central (241) dudit insert (24);
- pour chaque perçage (261a), un écrou de fixation (262) disposé contre ledit support d'écrou (261),
- pour chaque écrou de fixation (262), une vis de fixation (263) comportant une tige filetée (263a) destinée à être enfilée successivement dans ledit premier perçage central (241) de l'insert (24) associé, dans ledit deuxième perçage central (251) de l'entretoise (25) associée, dans un perçage (118) dudit longeron inférieur (106a), dans ledit perçage (261a) associé dudit support d'écrou (261) et dans ledit écrou de fixation (262) associé pour être vissé dans ce dernier, et une tête de vis (263b) destinée à venir en contact avec ledit premier panneau (21).

7. Système de propulsion (100) comportant un turboréacteur (102) destiné à être fixé à un longeron inférieur (106a) d'un caisson (106) d'aéronef (50), ledit système (100) comportant un dispositif (2) selon l'une quelconque des revendications 1 à 6.

8. Aéronef (10) comportant un système de propulsion (102) selon la revendication 7.
